# EUROPÄISCHE PATENTSCHRIFT

(11) **EP 0 766 262 B1**
(45) Veröffentlichungstag und Bekanntmachung des Hinweises auf die Patenterteilung: **18.08.1999**
(21) Anmeldenummer: 96115589.2
(22) Anmeldetag: 27.09.1996
(51) Int. Cl.: G21C 3/356

(54) **Abstandhalter mit besonders befestigten Federn für Brennelemente von Kernreaktoren**
Spacer grid for nuclear fuel elements having attached springs
Grille d'espacement pour un assemblage combustible d'un réacteur nucléaire avec des ressorts attachés

(30) Priorität: 29.09.1995 DE 19536471
(43) Veröffentlichungstag der Anmeldung: 02.04.1997
(73) Patentinhaber: SIEMENS AKTIENGESELLSCHAFT, 80333 München (DE)
(72) Erfinder: Steinke, Alexander, 91320 Ebermannstadt (DE)

(56) Entgegenhaltungen:
- WO-A-94/09495
- US-A- 3 679 546
- US-A- 5 311 564

## Beschreibung

Die Erfindung betrifft einen Abstandhalter eines Brennelements für einen mit Leichtwasser gekühlten Kernreaktor mit den im Oberbegriff des Anspruchs 1 bzw. des Anspruchs 7 angegebenen Merkmalen.

In Brennelementen, die einer starken Kühlwasser-Strömung ausgesetzt sind, geraten die Brennstäbe in heftige Vibrationen. Sie sind seitlich in den Maschen von gitterförmigen Abstandhaltern abgestützt, um diese Vibrationen zu dämpfen, mechanische Schaden auszuschließen und die Stäbe in einem wärmetechnisch sicheren Abstand voneinander zu halten. Häufig besitzen diese Abstandhalter quadratische Maschen, die aus sich kreuzenden Stegen gebildet sind und Federn enthalten, die jeweils in die Maschen eingesetzte Brennstäbe seitlich abstützen.

Aus der US-A-3.679.546 ist ein Abstandhalter aus sich kreuzenden Stegen bekannt, wobei jeder Brennstab einer Masche von einer Feder abgestützt ist, die aus einem langen Blechstreifen besteht, der sich parallel zur Achse des Brennstabs erstreckt. Dieser Blechstreifen besitzt einen ungefähr C-förmigen Längsschnitt mit einem federndem Mittelteil, der oben und unten (bezogen auf die Achsrichtung des Brennstabs) mittels einer konvexen Krümmung in Endstreifen übergeht, die an der dem Brennstab zugewandten Innenseite eines die Masche bildenden Steges entlang laufen und abgestützt sind. Den beiden Endstreifen sind jeweils quer zu den Brennstäben verlaufende Montageschlitze zugeordnet, und die Enden der Endstreifen sind so gebogen, daß sie durch die Montageschlitze hindurchgreifen und noch an der Rückseite des Steges anliegen.

In der Arbeitsstellung befindet sich jede Feder etwa in der Mitte einer Maschenseite. Die Feder ist aus der Betriebsstellung seitlich (d.h. längs der Schlitze) in eine Montagestellung verschiebbar, wobei die Montageschlitze an dieser Stelle in vergrößerte Querschnittsflächen übergehen, so daß die umgebogenen Enden der Endstreifen in diese verbreiterten Querschnittsflächen eingesetzt oder herausgenommen werden können.

Um ein unbeabsichtigtes Verschieben zu verhindern, sind die konvexen Krümmungen der Federn als Vorsprünge ausgebildet, die in der Betriebsstellung in entsprechende Ausnehmungen des Steges hineinragen, zum Montieren und Demontieren jedoch von der Wand des Steges weggebogen werden müssen.

Um die zum optimalen Abstützen der Brennstäbe erforderliche Federkraft aufzubringen, sind besondere Federmaterialien erforderlich, die jedoch häufig eine hohe Absorption für die Neutronen besitzen, die zur Aufrechterhaltung der Kernspaltung im Reaktor erforderlich sind. Diese bekannte Feder kommt zwar mit verhältnismäßig wenig Material aus, jedoch können die erforderlichen Federkräfte nur durch besondere Materialien erreicht werden.

Aus der EP-A-0 527 244 ist eine Feder bekannt, die ebenfalls einen C-förmigen Querschnitt besitzt, jedoch als "Diagonalfeder" ausgebildet ist, d.h. sie ragt nicht von einer Seitenfläche der Masche senkrecht zum Steg in die Masche, sondern diagonal von einer Maschenecke, an der sich zwei Stege kreuzen. Hierzu weisen die Schenkel (Endstreifen) der C-förmigen Feder an beiden Seiten lange, senkrecht zu den Brennstäben verlaufende Laschen auf und die beiden Laschen sind praktisch zur Form eines rechtwinkligen Dreiecks geformt, das in die Maschenecke einsetzbar ist. Alle Laschen durchsetzen entsprechende Montageöffnungen in einem der beiden Stege. Sie sind in den Montageöffnungen dieses einen Steges gehalten und liegen am anderen Steg an.

Diese Befestigungslaschen benötigen verhältnismäßig viel Material, was hinsichtlich der Neutronenabsorption und auch der Eigenfrequenz der vibrierenden Federn nachteilig sein kann. Gegenüber der Feder aus der US-A-3.679.546 ist zwar vorteilhaft, daß zwei derartige Diagonalfedern zu einer Doppelfeder kombiniert werden können, die in benachbarte Ecken zweier nebeneinander liegender Maschen ragen, jedoch läßt es die Art, nach der die Feder an den Maschenwanden befestigt ist, in beiden Fällen nicht zu, zwei solche Federn derart in der Mitte eines Steges anzuordnen, daß die beiden Federn von dem gemeinsamen Steg aus in zwei benachbarte Maschen ragen.

Mit der Erfindung soll eine Feder gefunden werden, die zu ihrer Befestigung an der Maschenwand besonders wenig Material benötigt und auch nicht mit konstruktiven Einschränkungen für die Form der Feder verbunden ist. Vielmehr soll die erfindungsgemäße Befestigung so flexibel sein, daß die Federform den jeweiligen Bedürfnissen des Reaktors angepaßt werden kann, insbesondere also auch die aus den genannten Dokumenten bekannte C-Form beibehalten werden kann.

Hierzu sieht eine erste Ausführungsform der Erfindung einen Abstandhalter mit den Merkmalen des Anspruchs 1 vor.

Bei diesem Abstandhalter weist die Feder einen dem Brennstab zugewandten, federnden Mittelteil auf, an den sich oben und unten - bezogen auf die Achsrichtung des Brennstabs - je ein Endstreifen anschließt. Während nach der US-A-3.679.546 nur der schmale, zum Brennstab ungefähr senkrechte Rand des oberen und unteren Endstreifens zu einem Profil gebogen ist, das in der entsprechenden Montageöffnung sitzt und den Rand des Steges umgreift, besitzt nach der Erfindung jeder der beiden Endstreifen zwei seitlich vorstehende Ränder, die zu Profilen gebogen sind; es ergeben sich also vier Profile zur Halterung der Feder. Die Ränder verlaufen demnach ungefähr parallel zur Achsrichtung und sind vom Brennstab weg gebogen.

Die an den Rändern der Endstreifen sitzenden Profile sind im montierten Zustand des Abstandhalters - also in der Betriebsstellung der Feder - mit einem inneren Teil jedes Profils an einer dem Brennstab zugewandten Innenfläche eines die Masche bildenden Steges abgestützt, während ein äußerer Profilteil jedes Profils durch einen im wesentlichen schlitzförmigen Öffnungsteil einer Montageöffnung des Steges ragt. Dieser äußere Profilteil umgreift die Kante des Steges am Ende des jeweiligen Schlitzes.

Entsprechend den vier Profilen können sich dabei vier schlitzförmige Öffnungsteile der Montageöffnung ergeben. Diese führen zu einer vergrößerten Querschnittsfläche der Montageöffnung, die sich an einer Stelle des Steges befindet, der seitlich zur Betriebsstellung der Feder versetzt ist. Die Feder wird an dieser seitlich versetzten Stelle ("Montagestellung der Feder") eingesetzt, weshalb jeder schlitzförmige Öffnungsteil zu einem vergrößerten Öffnungsteil führt, der so geformt ist, daß die Außenteile der Profile, die sich an den Seiten der Endstreifen befinden, bei der Montagestellung der Feder in die Montageöffnung eingesetzt werden können. Die derart eingesetzte Feder kann dann längs des Schlitzes in die Betriebsstellung verschoben werden.

Wie die Figuren noch deutlich machen, können also insbesondere vier voneinander getrennte vergrößerte Öffnungsteile vorgesehen sein, die am Ende der vier schlitzförmigen Öffnungsteile sitzen, so daß vier räumlich getrennte Öffnungen entstehen und die Montageöffnung bilden. Es können aber auch übereinander liegende schlitzförmige Öffnungsteile in einen gemeinsamen vergrößerten Öffnungsteil münden. Ebenso kann vorgesehen sein, jeweils den Rändern des oberen Endstreifens einen oberen gemeinsamen Schlitz zuzuordnen, und auch die Ränder des unteren Endstreifens können mit ihren Profilen in einen gemeinsamen unteren Schlitz greifen.

Nach einer zweiten Ausführungsform der Erfindung besitzt der Abstandhalter die Merkmale des Anspruchs 7.

Dabei sind zwei Federn in einer Montageöffnung eines Steges, der zwei benachbarten Maschen gemeinsam ist, gehalten und im wesentlichen gleich aufgebaut.

Die Feder besitzt einen federnden Mittelteil, der in die jeweilige Masche ragt und den dort eingesetzten Brennstab seitlich abstützt. An diesen Mittelstreifen schließt sich oben und unten - bezogen auf die Brennstab-Achse - ein oberer und unterer Endstreifen an. Jeder der beiden Endstreifen besitzt einen linken und rechten seitlichen Rand, der jeweils ungefähr parallel zur Brennstab-Achse verlauft und vom Brennstab weggebogen ist. Dadurch entstehen vier Ränder, wobei jeder Rand ein eigenes Profil trägt. In der Betriebsstellung der Feder ist jedes Profil mit einem inneren Profilteil an einer dem Brennstab zugewandten Seitenfläche des gemeinsamen Steges abgestützt und greift mit einem äußeren Profilteil durch die Montageöffnung hindurch. Die vom Rand der Montageöffnung gebildeten Stegkanten werden also zumindest teilweise von dem Innenteil und Außenteil jedes Profils formschlüssig umgriffen .

Im montierten Zustand des Abstandhalters (Betriebsstellung beider Federn) befinden sich die Federn zu beiden Seiten des Steges, und zwar liegen sich die oberen Endstreifen gegenüber, und ebenso liegen sich die unteren Endstreifen gegenüber. Sie können dabei direkt an den Seitenflächen des Steges anliegen oder auch in einem geringen Abstand von den Stegflächen gehalten sein, z. B. um einen geringfügigen Winkel zwischen den Endstreifen und dem Steg zu erzeugen. Die Profile sind dabei so geformt, daß jedes Profil am Rand eines Endstreifens der einen Feder neben einem Profil am Rand des gegenüberliegenden Endstreifens der anderen Feder liegt, also insgesamt vier Profilpaare - entsprechend den beiden Rändern der zwei Endstreifen jeder Feder - entstehen.

Auch bei dieser Variante wird jede Feder in einer Montagestellung eingesetzt und erst nach dem Einsetzen längs schlitzförmiger Öffnungsteile in die Betriebsstellung verschoben. Der Montagestellung entspricht dabei auf den Flächen des Steges eine verbreiterte Querschnittsfläche, in die alle äußeren Profilteile beider Federn eingesetzt werden. Das Profil der einen Feder wird dabei von der einen Seite, daß Profil der anderen Feder von der anderen Seite in die verbreiterte Querschnittsfläche eingeführt. Dadurch entsteht eine Federkombination, mit vier Paaren nebeneinanderliegender Profile (nämlich links oben, rechts oben, rechts unten, links unten). Um diese Federkombination nun von der Montagestellung in die Betriebsstellung zu schieben, enthält die Montageöffnung mindestens einen im wesentlichen schlitzförmigen Öffnungsteil, so daß eine obere, quer zu den Brennstäben verlaufende Kante entsteht, die als Führung für die beiden oberen Profilpaare dient, während eine quer zu den Brennstäben verlaufende untere Kante des Öffnungsteils als Führung für die beiden unteren Profilpaare dient.

Am Ende des schlitzförmigen Öffnungsteils befindet sich eine obere Endkante und eine untere Endkante, die sich ungefähr parallel zur Brennstabachse erstrecken, praktisch übereinander liegen und an denen dann ein oberes Profilpaar und ein unteres Profilpaar anschlägt, sobald die Federn gemeinsam seitlich in die Betriebsstellung verschoben sind.

Die Betriebsstellung der Federn gemäß der Erfindung befindet sich insbesondere am Steg in der Mitte zwischen zwei benachbarten Ecken der Masche, wobei wenigstens ein Federteil durch die Kraft der Federn in einer Rastöffnung des Steges gehalten, die Feder also zumindest im belasteten Zustand in dieser Stellung verrastet ist.

Vorteilhafte Weiterbildungen der Erfindung sind in den Unteransprüchen gekennzeichnet. Anhand von mehreren Ausführungsbeispielen und 19 Figuren wird die Erfindung naher erläutert.

Es zeigen:
- FIG 1: einen Längsschnitt durch zwei benachbarte Maschen des Abstandhalters, wobei in die rechte Masche erfindungsgemäß eine C-förmige Feder hineinragt; außerdem sind in der rechten Masche die äußeren Profilteile an den Endstreifen einer anderen Feder erkennbar, die an der Rückseite eines Steges der Masche abgestützt ist;
- FIG 2: den Längsschnitt der Figur 1 mit einem eingesetzten Brennstab;
- FIG 3: einen Längsschnitt durch eine andere, gemäß der Erfindung befestigbare Feder;
- FIG 4: den Blick auf die Feder der Figur 3, von oben;
- FIG 5: einen Querschnitt durch die Feder der Figur 3;
- FIG 6: vier voneinander unabhängige Teile der Montageöffnung, die zur Befestigung der Feder nach Figur 3 im Steg vorgesehen sind;
- FIG 7: einen Querschnitt durch eine andere erfindungsgemäße Feder in der Betriebsstellung;
- FIG 8: einen Längsschnitt durch eine Masche, die zwei gegenüber Figur 1 etwas abgewandelte C-förmige Federn gemäß der Erfindung trägt;
- FIG 9: die Aufsicht auf zwei Federn, wie sie für die zweite Variante der Erfindung vorgesehen sind:
- FIG 10: einen Längsschnitt durch die beiden Federn, wenn sie zunächst entsprechend der Figur 1 an unterschiedlichen Stegen des Gitters befestigt sind;
- FIG 11: die beiden Federn der Figuren 9 und 10, wenn sie gemäß der zweiten Variante der Erfindung an einem gemeinsamen Steg befestigt sind;
- FIG 12: einen Querschnitt durch die beiden Federn der Figur 9 vor ihrem Einsetzen in die Montageöffnung des gemeinsamen Steges;
- FIG 13: einen Querschnitt durch die beiden Federn der Figur 12, wenn sie in die Öffnung eingesetzt und längs des gemeinsamen Steges in die Betriebsstellung verschoben sind;
- FIG 14: eine mit einem einzigen Feder-Typ auskommende Variante der Figur 8;
- FIG 15, 16: Aufsicht und Seitenansicht einer Variante der Feder von Figur 14;
- FIG 17: eine weitere Variante dieser Feder;
- FIG 18: einen Ausschnitt aus einem vorteilhaften Abstandhalter nach der Erfindung, und
- FIG 19: einen Querschnitt durch einen Teil des Abstandhalters der Figur 18.

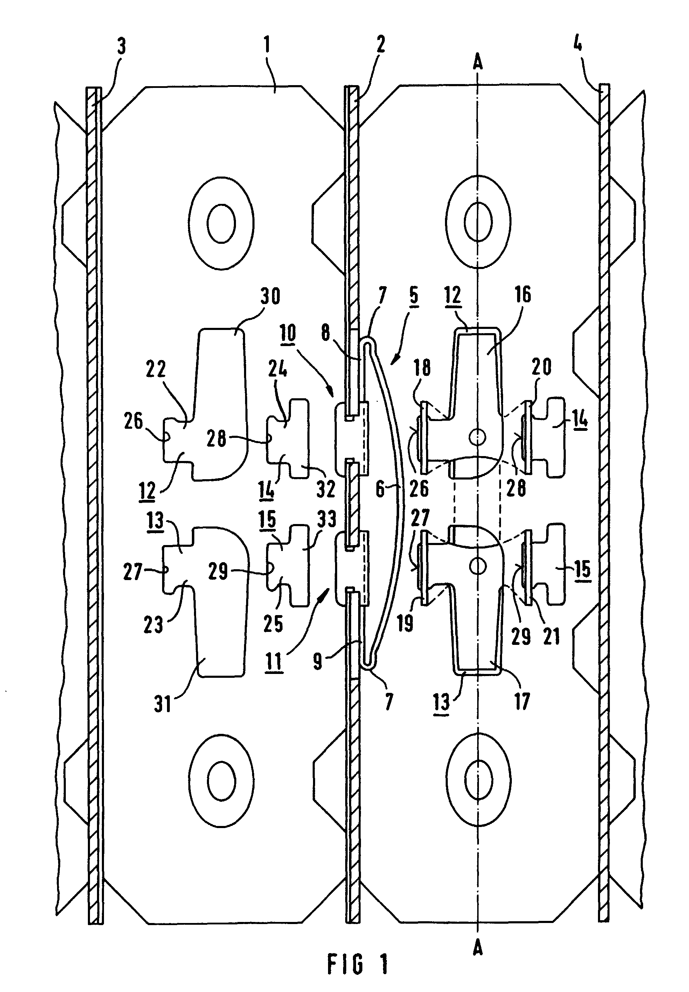

Die Ausführungsbeispiele betreffen Abstandhalter mit Längsstegen und Querstegen, die viereckige Maschen bilden. Dabei bildet gemaß Figur 1 der Längssteg 1 und die ihn kreuzenden Querstege 2, 3 und 4 eine linke Masche in die noch keine Feder eingesetzt ist, während in die rechte Masche von der Mitte des Querstegs 2 aus eine Feder 5 ragt. Bei dieser Ausführungsform geht ein gewölbter, federnder Mittelteil 6 jeweils oben und unten über eine konvexe Krümmung 7 in einen oberen Endstreifen 8 und einen unteren Endstreifen 9 über. Die Achse des in die Masche einzusetzenden Brennstabs ist mit A-A bezeichnet. In der Betriebsstellung liegt A-A in der Mitte zwischen den Stegen 2 und 4.

An jedem zu A-A parallelen Rand der beiden Endstreifen der Feder 5 sitzt ein Profil; die Feder hat also vier Profile, von denen in Figur 1 nur das obere vordere Profil 10 und das untere vordere Profil 11 sichtbar ist, während die entsprechenden hinteren Profile 10', 11' verdeckt und daher zeichnerisch nicht dargestellt sind. Ferner tragt der Längssteg 1 im rechten Teil der Figur 1 ebenfalls eine Feder, die jedoch in eine hinter dem Längssteg 1 liegende Masche ragt, so daß Figur 1 nur diejenigen Teile dieser (im übrigen verdeckten) Feder zeigt, die durch die Öffnungen 12, 13, 14, 15 ragen, oder durch diese Öffnungen sichtbar sind. Diese sichtbaren Teile der (im übrigen verdeckten) Feder sind die beiden Endstreifen 16, 17 und die an deren seitlichen Rändern sitzenden Profile 18, 19, 20, 21. Im linken Teil der Figur 1 wiederholen sich im Längssteg diese Öffnungen 12, 13, 14, 15.

Jede der Öffnungen 14, 15, 16, 17 enthält einen in die gleiche Richtung (nämlich nach links) quer zu A-A verlaufenden, schlitzförmigen Öffnungsteil 22, 23, 24, 25, an dessen Ende die Profile 18 ... 21 sitzen. Diese Profile schlagen an den seitlichen Endkanten 26, 27, 28, 29 der Schlitze 22 ... 25 an.

Jeder Öffnungsteil 26 ... 29 endet in einem vergrößerten Öffnungsteil 30, 31, 32, 33, und im rechten Teil der Figur 1 ist erkennbar, daß die Profile 18 ... 21, die in der Betriebsstellung der entsprechenden Feder durch die schlitzförmigen Öffnungsteile 22 ... 25 ragen, aus den Öffnungen 12 ... 15 entfernt werden können, wenn sie längs der schlitzförmigen Öffnungsteile 22 ... 25 nach rechts bis in die vergrößerten Öffnungsteile 30 ... 33 verschoben werden. Diese verschobene Stellung entspricht der Montagestellung der Feder.

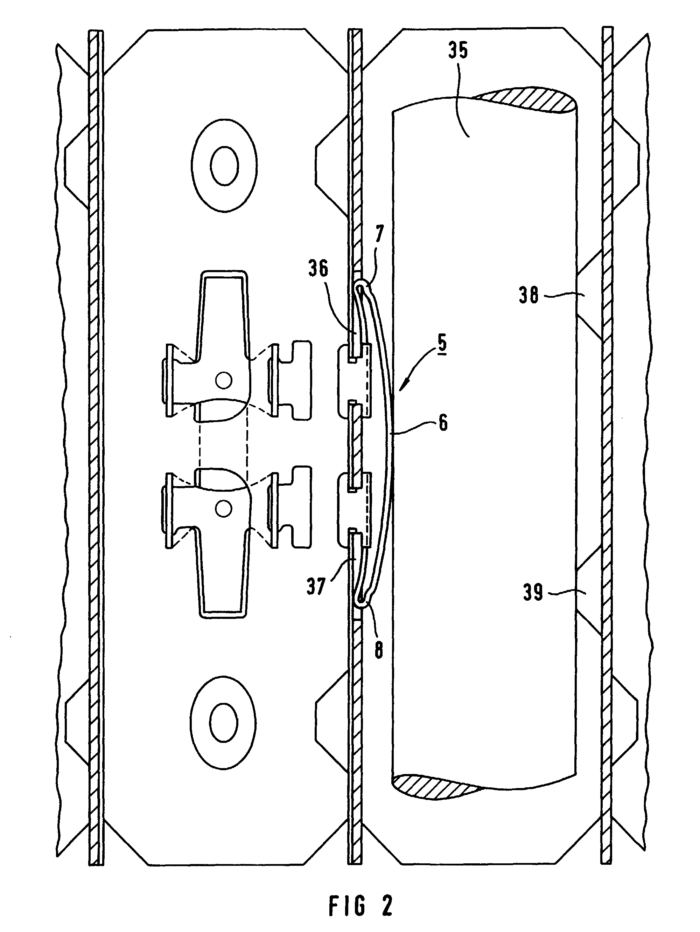

Die schlitzförmigen Teile der Montageöffnungen 12, 13, 14, 15 besitzen eine Länge, die praktisch dem halben Abstand zwischen den profilierten Rändern der Feder (also praktisch der halben Federbreite) entsprechen. Die vergrößerten Querschnittsflächen 30, 31 kommen also in der Mitte zwischen den Endkanten 26, 28 bzw. 27, 29 der Schlitze zu liegen. Der Sinn dieser Dimensionierung wird aus Figur 2 deutlich, denn wenn der Brennstab 40 in die Masche eingesetzt ist, drückt er den federnden Mittelteil 6 dieser Feder 5 mit den anschließenden konvexen Krümmungen 7, 8 in die vergrößerten Querschnittsöffnungen 36, 37, die derart vergrößert sind, daß ihre Oberkante und Unterkante über die obere und untere Dimensionierung der Feder 5 hinausragt.

Auf diese Weise werden also die konvexen Krümmungen 7, 8 verwendet, um die Feder 5 zu fixieren, wenn sie durch einen Brennstab 35 belastet ist und den Brennstab an entsprechende Halteelemente (z. B. die Noppen 38, 39 an der der Feder gegenüberliegenden Maschenseite) drückt.

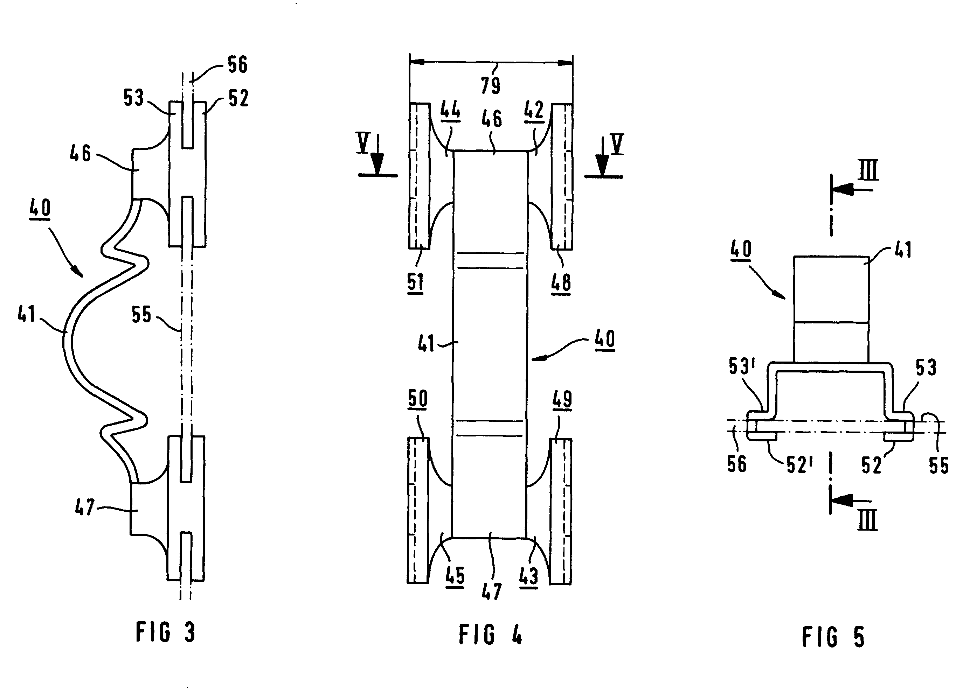

Federn mit C-Form werden zwar bevorzugt, jedoch können auch andere Federformen, sofern sie die gewünschte Federkraft aufbringen, mit der erfindungsgemäßen Befestigung kombiniert werden. Dies ist in den Figuren 3 bis 5 anhand einer Feder 40 mit einem hut- oder tellerförmigen Mittelteil 41 gezeigt. Insbesondere Figur 4 laßt die Ränder 42, 43, 44, 45 an den beiden, an den Mittelteil 41 anschließenden Endteilen 46, 47 erkennen. Diese Ränder tragen die Profile 48, 49, 50, 51, die jeweils mit einem Innenteil 53, 53' auf der Innenseite 55 einer (mit durchbrochenen Linien dargestellten) Wand 56 anliegen, während die Außenteile 52, 52' dieser Profile 48 ... 51 durch die (nicht dargestellte) Montageöffnung ragen und deren Öffnungsrand umgreifen.

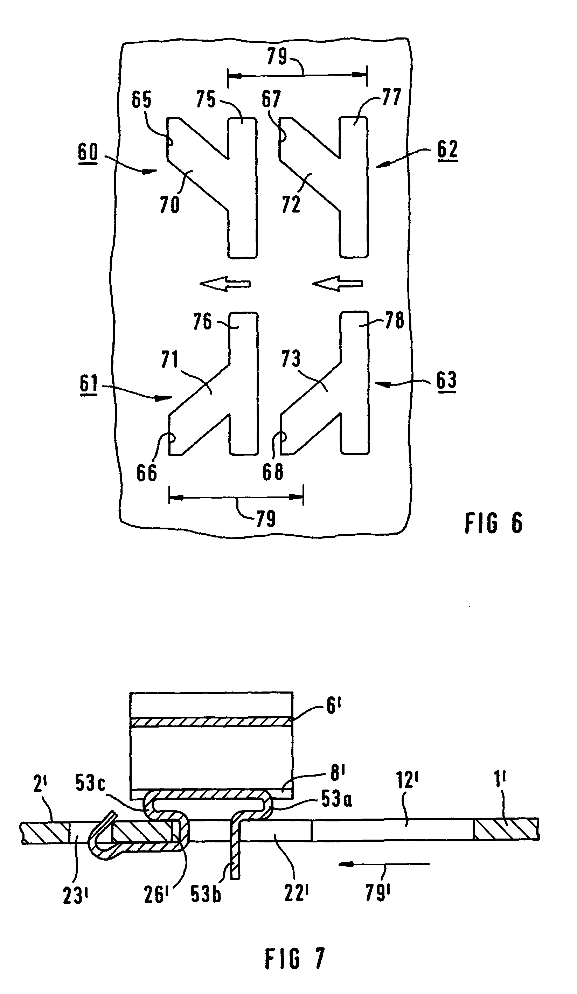

Diese Montageöffnungen 60, 61, 62, 63 sind in Figur 6 genauer dargestellt. Dabei sind mit 65, 66, 67, 68 die Endkanten der schlitzförmigen Öffnungsteile bezeichnet, an denen in der Betriebsstellung der Feder die Profile 48, 49, 50, 51 anschlagen. Die schlitzförmigen Öffnungsteile 70, 71, 72, 73 verlaufen in diesem Fall nicht senkrecht zur Brennstab-Achse, sondern mit einem gewissen Winkel, so daß die Feder, wenn sie aus der Betriebsstellung in die Montagestellung verschoben werden soll, zusammengedrückt werden muß. Dies ist nur möglich, solange die Feder nicht durch einen Brennstab belastet ist (vgl. Figur 2), so daß im belasteten Zustand die Feder in der Betriebsstellung verriegelt ist.

Die schlitzförmigen Öffnungsteile 70 ... 73 enden auch in diesem Fall in vergrößerten Querschnittsflachen 75, 76, 77, 78 und die Pfeile 79 geben die Breite der Feder (Abstand zwischen den äußersten Seitenkanten der Profile) an, die der entsprechenden Breite 79 der Figur 4 entspricht.

In Figur 7 ist ein der Figur 5 entsprechender Querschnitt durch eine andere Feder gezeigt, die durch eine vergrößerte Öffnungsfläche 12' einer in dem Steg 1' vorgesehenen Montageöffnung mit den profilierten Rändern ihrer Endstreifen 8' eingesetzt und dann in Richtung des Pfeiles 79' längs des schlitzförmigen Teils 22' der Montageöffnung soweit verschoben ist, bis sie an der Endkante 26' dieses schlitzförmigen Teils anstößt.

Da die profilierten Ränder die Größe der Öffnungsfläche 12' bestimmen, sind diese Ränder zunächst zueinander gebogen. Dadurch können die oberen Profile (unter Umständen auch alle vier Profile) in die gemeinsame Öffnungsfläche 12' eingesetzt werden. Außerdem ergibt sich dadurch eine Verbesserung der Angriffsfläche, mit der die inneren Profilteile 53a an der Innenseite 2' des Steges abgestützt sind.

Während das äußere Profilteil 53b am einen Rand nur oberhalb und unterhalb der Zeichenebene die Kante des Steges 1' am Rand des Schlitzes 22' umgreift, trägt der andere Rand 53c eine Erhebung, die in diesem Fall in Form eines Widerhakens ausgebildet ist. Damit ist die Feder in einer Rastöffnung 23' des Steges verrastet, sobald die Betriebsstellung eingenommen ist.

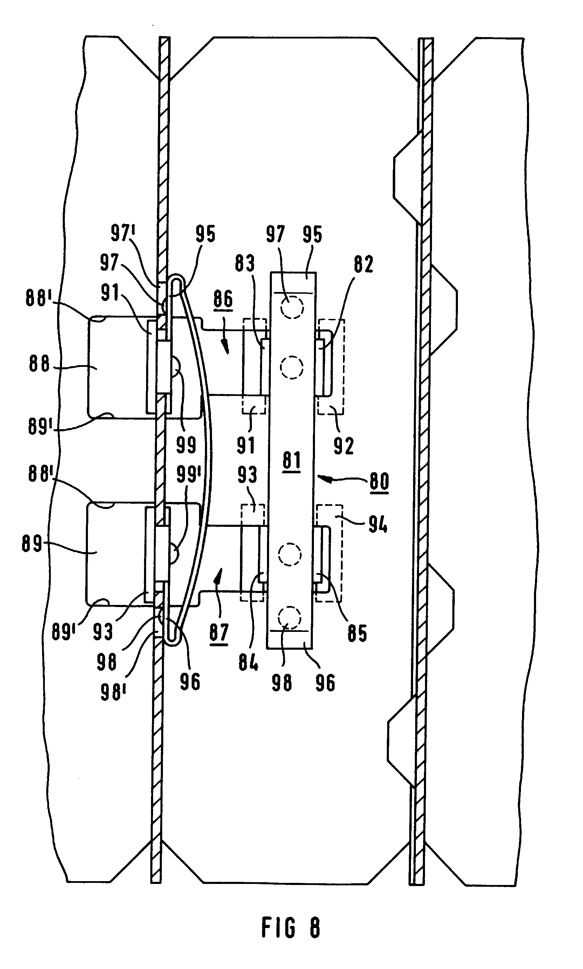

Bei dem in Figur 8 gezeigten Ausführungsbeispiel geht der Mittelteil 81 der Feder 80 ebenfalls in Endstreifen über, die ungefähr parallel zur Brennstabs-Achse verlaufen und deren seitliche Ränder 82, 83, 84, 85 vom Brennstab weggebogen sind und entsprechende Montageöffnungen 86, 87 durchsetzen. Die auf der Rückseite eines Steges 80 vorstehenden, äußeren Teilprofile 91, 92, 93, 94 sind in diesem Fall (ähnlich wie bei Figur 5) nochmals umgebogen und verbreitert, um die Kanten der Öffnungen 86, 87 mit einer größeren Flache zu umgreifen.

Abweichend von den Figuren 1 bis 7 sind in diesem Fall jedoch nur zwei schlitzförmige Öffnungsteile vorgesehen, wobei der obere schlitzförmige Öffnungsteil 86 dem oberen Profil-Paar 91, 92 und der untere Öffnungsteil 87 dem unteren Profil-Paar 93, 94 zugeordnet ist. Die mit den Öffnungsteilen 86, 87 verbundenen vergrößerten Querschnittsflachen 88, 89 befinden sich bei diesem Ausführungsbeispiel an der Stelle, an der eine Langswand von einer Querwand gekreuzt wird. Die Feder wird daher in die entsprechenden Stege eingesetzt, bevor der Abstandhalter verschweißt wird. Dadurch kann zwar z. B. eine beschädigte Feder nachträglich nicht ausgewechselt werden, jedoch ist mit Sicherheit verhindert, daß sich eine Feder unbeabsichtigt löst, wenn bei Inspektionsarbeiten ein Stab aus dem Brennelement entfernt wird.

Um die Feder in der Betriebsstellung zu fixieren, tragt jeder Endstreifen 95, 96 eine Verriegelungsnoppe 97, 98, die in ein entsprechendes Verriegelungsfenster 97', 98' im Steg eingreift. Die Feder kann daher nur aus der Betriebsstellung entfernt werden, wenn die entsprechenden Endstreifen weit genug von dem Steg weggebogen werden.

Außerdem tragen die Endstreifen nach Figur 8 weitere Noppen 99, 99', die in Richtung auf den federnden Mittelteil weisen und als Anschlag dienen, der bei einer Belastung der Feder die Auslenkung des federnden Mittelteils begrenzt. Dadurch kann verhindert werden, daß die Feder überdehnt und beschädigt wird, wenn der entsprechende Brennstab in die Masche eingesetzt wird.

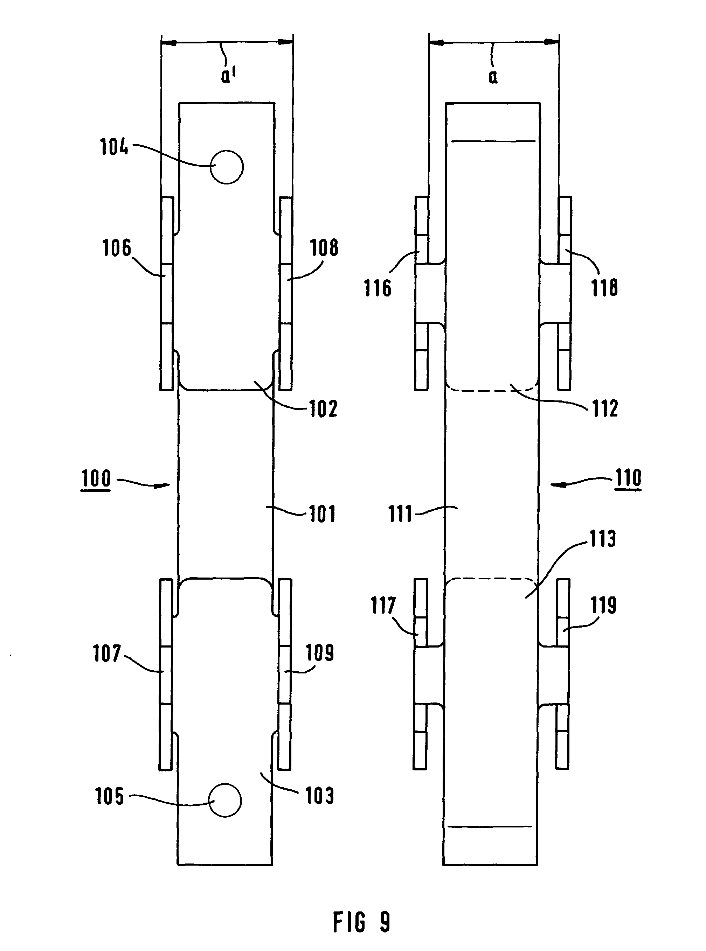

Es genügt in aller Regel, wenn die vom Brennstab weggebogenen und durch die Montageöffnungen ragenden äußeren Profilteile an den Rändern der Endstreifen nur in einer Richtung profiliert sind, also als Stützstege ausgebildet sind, die den Steg in der Montageöffnung ungefähr senkrecht durchsetzen und ungefähr parallel zur Brennstab-Achse laufen. Die Unterseite einer derartigen Feder 100 ist links in Figur 9 gezeigt, wobei der Mittelteil 101 weitgehend von den Endstreifen 102 und 103 mit den Verriegelungsnoppen 104, 105 verdeckt ist. Dabei sind die vier Profile 106, 107, 108, 109 erkennbar, die als flache Stützstege die seitlichen Ränder der Endstreifen 102 und 103 bilden.

Rechts ist die Oberseite einer zweiten Feder 110 mit einem Mittelteil 111 und den verdeckten (daher nur durch unterbrochene Linien angedeuteten) Endstreifen 112, 113 dargestellt.

Bei dieser Lage der beiden Federn 100 und 110 stehen sich die beiden Federn insofern spiegelsymetrisch gegenüber, als die Unterseite der ersten Feder 100 auf die Unterseite der zweiten Feder 110 weist.

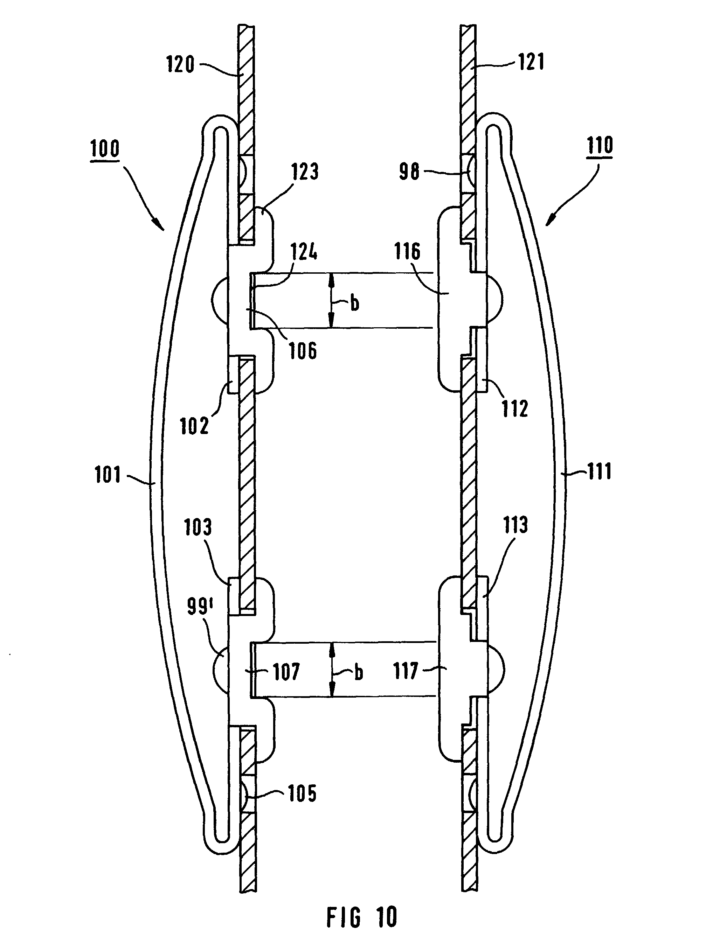

Figur 10 zeigt zwei parallele Stege 120, 121 des Abstandhalters, wobei die Feder 100 von links in den Steg 120, die Feder 110 von rechts in den Steg 121 eingesetzt ist. Die Profile 108, 118 bzw. 109, 119 an den Rändern der beiden Federn 100, 110 unterscheiden sich hierbei etwas. Der eine äußere Profilteil 123 des Profils 108, der zunächst durch eine - nicht dargestellte - Montageöffnung geschoben wurde und durch einen Schlitz des Steges 120 hindurchragt, weist nämlich eine Ausnehmung 124 der Breite b auf, die für das Profil 118 nicht erforderlich ist. Die Breite b entspricht etwa der Breite des Profils 118 an der Stelle, wo dieses Profil 118 in den Endstreifen 112 übergeht. Außerdem unterscheidet sich nach Figur 9 die Feder 110 von der Feder 100 auch dadurch, daß die Innenflächen der stegartigen Ränder 116, 118 der Feder 110 einen Abstand a haben, der gleich oder geringfügig größer ist als der Abstand a' zwischen den Außenflachen der stegartigen Ränder 106, 108 der Feder 100.

Durch diese Profilierung wird gemaß Figur 9 folgendes erreicht: Die beiden Federn sind bereits so dargestellt, daß ihre Mittelteile nach entgegengesetzten Seiten weisen. Wird die Feder 100, z. B. nach rechts verschoben, so können dabei die Ränder der Feder 100 von links in die entsprechenden, nach links weisenden Ränder der Feder 110 eingesetzt werden.

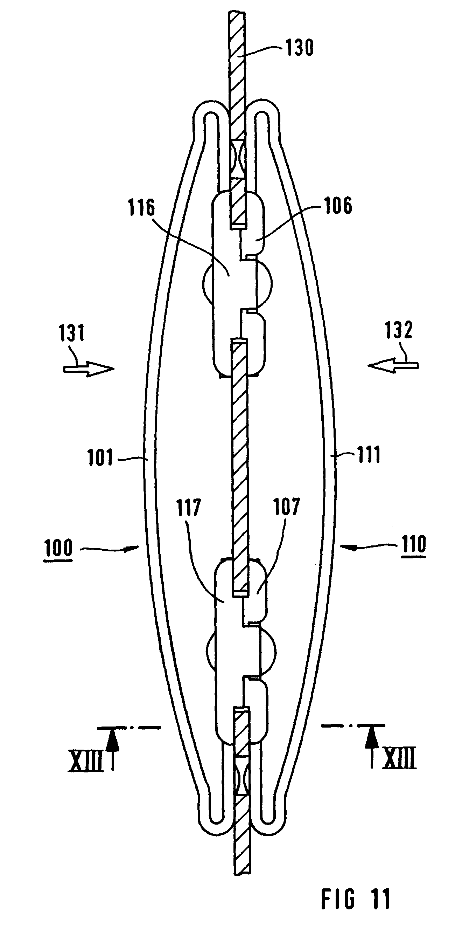

Die beiden Federn können daher gleichzeitig an einer gemeinsamen Wand so befestigt werden, daß sich ihre Endstreifen gegenüberstehen, wie dies in Figur 11 anhand der Wand 130 gezeigt ist. Die Feder 100 ist also entsprechend dem Pfeil 131 von links, die Feder 110 entsprechend dem Pfeil 132 von rechts in eine erweiterte Öffnung der Wand 130 eingesetzt und in der Öffnung verschoben, bis am oberen Ende 102 bzw. 112 die Profile 106 und 116 beider Federn bzw. die Profile 108 und 112 jeweils ein ineinander greifendes Profilpaar bilden. Entsprechend werden an den unteren Enden 103, 113 von den Profilen 107 und 117 ein Profilpaar und von den Profilen 109, 119 ein zweites Paar ineinander greifender Profile gebildet.

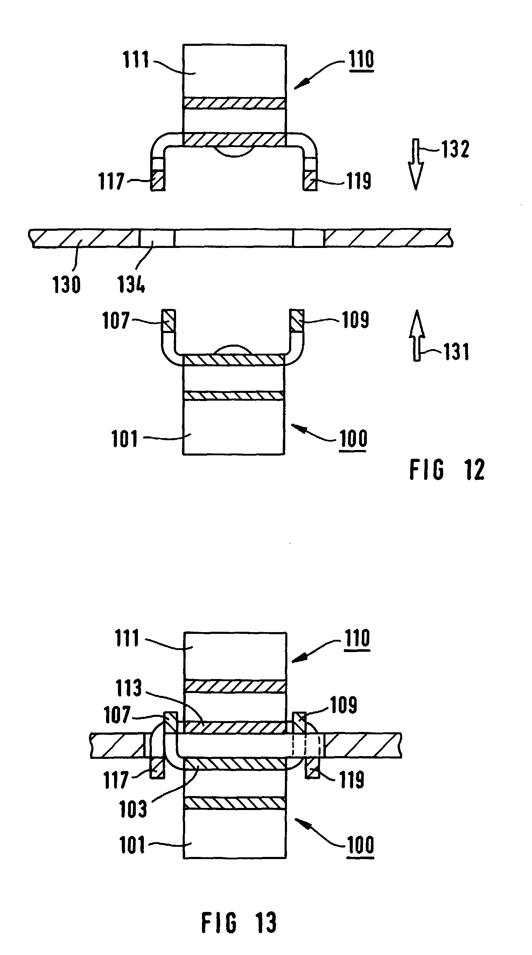

Figur 12 laßt die Wand 130 mit der vergrößerten Querschnittsfläche erkennen, bevor die Federn 100 und 110 entsprechend den Pfeilen 131 und 132 mit ihren Profilteilen in entsprechende Montageöffnungen 134 eingesetzt werden. Dabei greifen dann schließlich die Profile der beiden Federn ineinander und das Federpaar kann dann seitlich längs der Kante eines schlitzförmigen Öffnungsteils in die Betriebsstellung verschoben werden.

Figur 13 zeigt den entsprechenden Querschnitt des fertig montierten Federpaares, wobei in Figur 11 mit XIII-XIII die für die Figur 13 gewählte Querschnittsebene angegeben ist.

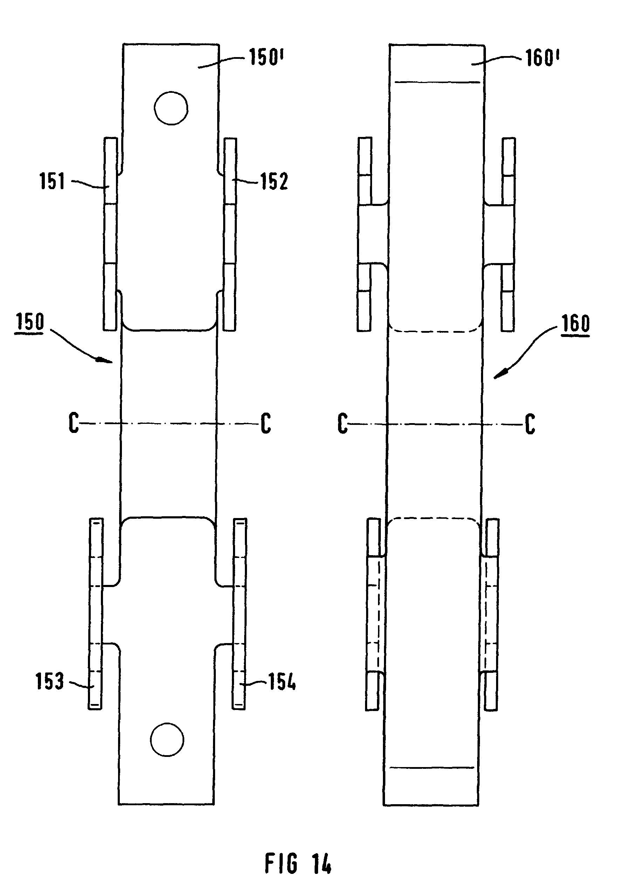

Figur 14 zeigt die Unterseite einer Feder 150, die in sofern eine Kombination der beiden Federn 100 und 110 aus Figur 9 darstellt, als die seitlichen Ränder 151, 152 des oberen Endstreifens 150' entsprechend den Rändern 106, 108 des Endstreifens 102 der Feder 100 gebildet ist, während die entsprechenden unteren Ränder 153, 154 entsprechend den unteren Rändern 117, 119 der Feder 110 ausgebildet sind. Wird die Feder 150 um ihre Querachse CC geschwenkt, so geht die linke Feder 150 der Figur 14 in die rechte Feder 160 über. Diese beiden Federn 150, 160 können nun in der gleichen Weise, wie dies in den Figuren 12 und 13 dargestellt ist, zu einem Federpaar zusammengesetzt werden. Man kommt hierbei also mit einem Federtyp aus.

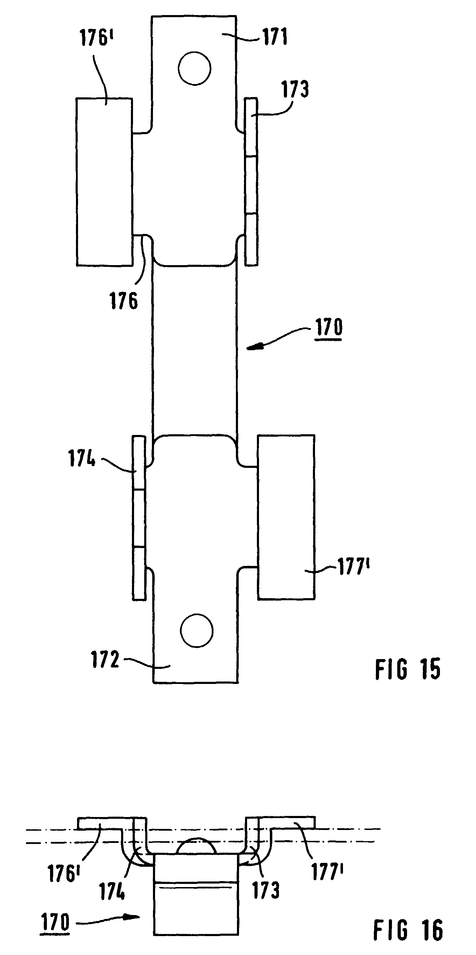

Bei der Feder 170 der Figuren 15 und 16 ist der rechte obere Rand 173 des oberen Endstreifens 171 und der linke untere Rand 174 des unteren Endstreifens 172 entsprechend den stegartigen Rändern der Feder 100 ausgebildet, jedoch der linke obere Rand 176 und der rechte untere Rand weichen insofern von dem Rand der Feder 110 ab, als die äußeren, über den Steg 178 ragenden äußeren Profilteile 176', 177' nach außen über den Rand des schlitzförmigen Öffnungsteils hinausgebogen ist. Die Feder 170 stellt somit eine Kombination der Feder 150 mit der in Figur 8 gezeigten Feder dar.

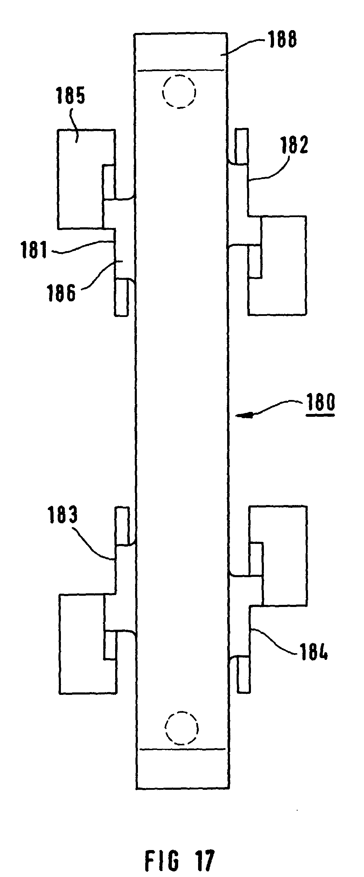

Darüber hinaus können auch die Profile 174, 176 der Feder 170 zu einem einzigen Profil kombiniert werden, das für alle vier Ränder 181, 182, 183, 184 der Feder verwendbar ist, wie dies die Feder 180 der Figur 17 zeigt. Dabei entspricht der eine Profilteil 185 dem Profilteil 176', der andere Profilteil 186 dem Profilteil 174.

Es zeigt sich also, daß die erfindungsgemäße Befestigung vielseitige Variationsmöglichkeiten eröffnet.

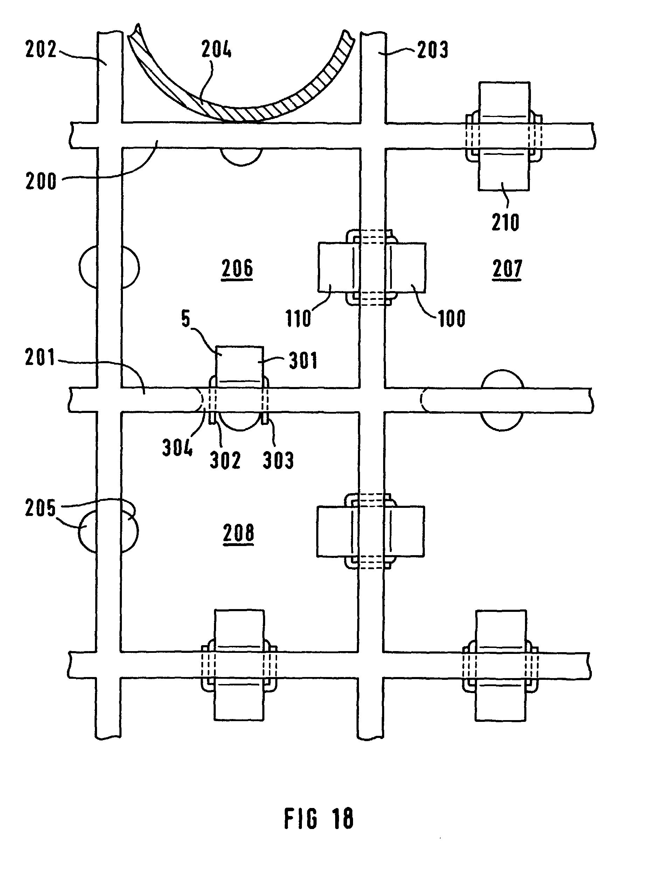

Bei dem Abstandhalter, wie er z. B. für einen Druckwasserreaktor in Figur 18 als Ausschnitt gezeigt wird, bilden die Stege 200, 201, 202, 203 ... in der Regel quadratische Maschen, bei denen zwei benachbarte Maschenseiten in der Mitte je eine in die Masche ragende Feder tragen, die den Brennstab dieser Masche (zur besseren Übersicht sind die Brennstäbe weggelassen) gegen gegenüberliegende Noppen 205 drücken. Meistens liegen einer Feder zwei einzelne Noppen gegenüber, die übereinander und jeweils oberhalb und unterhalb der Ebene angeordnet sind, in der die Feder gegen den Brennstab drückt.

Im allgemeinen bilden je zwei benachbarte Maschen (z. B. die Maschen 206, 207) ein Paar und an der die Maschen eines Paares trennenden Wand können die Federn, die von dieser gemeinsamen Wand aus in die Maschen des Paares (z. B. die federn 110 und 111) hineinragen, gemäß den Figuren 10 bis 17 befestigt sein.

Da Druckwasser-Brennelemente auch einige Maschen enthalten, die an Stelle eines Brennstabes ein Führungsrohr 204 enthalten, an denen der Abstandhalter befestigt ist, können sich Abweichungen in der paarweisen Zuordnung der Maschen ergeben, so daß auch ungepaarte Federn (z. B. Feder 6) erforderlich werden können. Ähnliche Verhältnisse können auch durch Wasserrohre hervorgerufen werden, wie sie in manchen Siedewasser-Brennelementen an der Stelle einiger Brennstäbe verwendet werden.

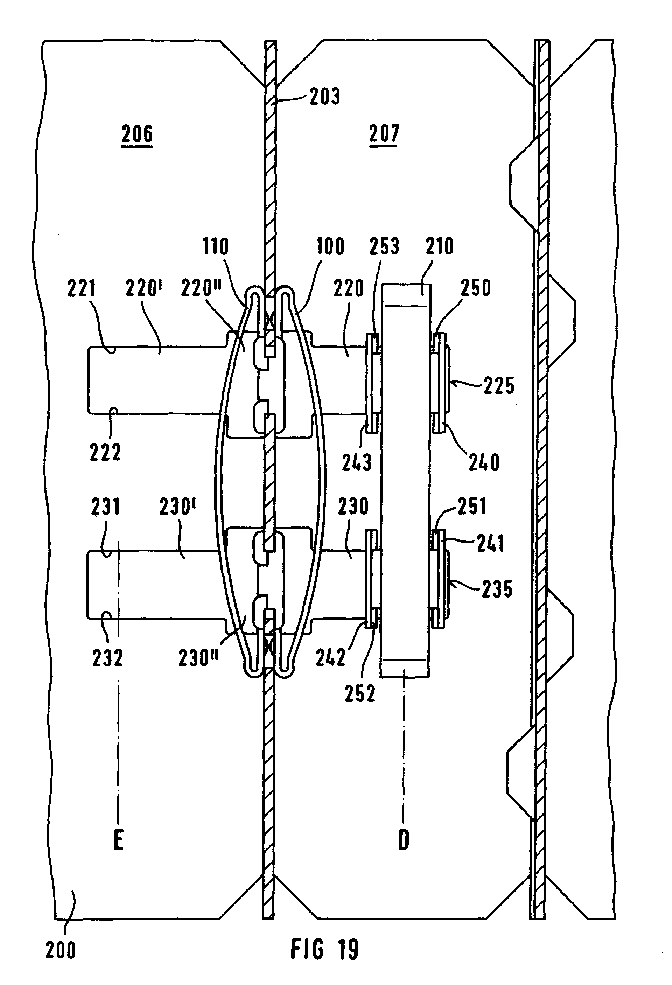

Figur 19 zeigt den Längsschnitt durch einen Teil der Maschen 206 und 207 mit den an den Stegen 200 und 206 abgestützten Federn 210, 110 und 111. Dabei ist an der Wand 200 die Montageöffnung erkennbar, die nötig ist zum Einsetzen der Feder 210 (bzw. eines Federpaares, von dem außer der ersten Feder 210 nur der äußere Profilteil sichtbar ist, der jeweils an den Seitenrändern der Endstreifen der zweiten Feder angeformt ist).

Die Montageöffnung, die in diesem Fall aus den beiden schlitzförmigen Öffnungsteilen 220 und 230 besteht, weist eine verbreiterte Öffnungsfläche 221 auf, die seitlich versetzt ist zu der Stellung, in der sich die Feder 210 (bzw. das erwähnte Federpaar) befindet. Vorteilhaft ist diese verbreiterte Öffnungsfläche an der Stelle des Steges angebracht, an der sich im fertig montierten Brennelement dieser Steg mit einem anderen Steg 203 kreuzt, so daß diese verbreiterte Öffnungsfläche versperrt ist, wenn die Stege nach Einsetzen der Federn zum gitterförmigen Abstandhalter zusammengefügt werden. Gemäß Figur 12 und 13 wird die Feder 210 mit den Profilteilen ihrer Endstreifen von der in Figur 19 sichtbaren Vorderseite des Steges aus eingesetzt, wobei nur noch die inneren Profilteile 250, 251, 252, 253 der Feder 210 in der Masche verbleiben, jedoch die äußeren Profilteile, die in Figur 19 nicht sichtbar sind, in die Nachbarmasche ragen. Von der Nachbarmasche (also der Rückseite der Wand 200) werden entsprechend die äußeren Profilteile 240, 241, 242, 243 der anderen Feder durch die Öffnungsfläche 221 geschoben und die beiden Federn werden so zusammengefügt, daß sich jeweils ein Profilpaar 240, 250 bzw. 241, 251 bzw. 242, 252 bzw. 243, 253 ergibt.

Falls die verbreiterte Öffnungsfläche dazu dienen soll, sowohl in der Position D als auch in der Position E entsprechende Federn einzusetzen, gehen von dieser Öffnungsfläche schlitzförmige Öffnungsteile (220, 220', 230, 230') in spiegelbildlicher Anordnung nach beiden Seiten aus. Diese schlitzförmigen Öffnungsteile haben oben und unten Kanten 221, 222 bzw. 231, 232, die als Führung für die Profilpaare dienen, wenn diese Profilpaare seitlich von der Montagestellung in die Betriebsstellung (D) verschoben werden. In dieser Betriebsstellung schlagen dann zwei Profilpaare, nämlich das Profilpaar 240, 250 und das Profilpaar 241, 251 an den übereinanderliegenden Endkanten 225, 235 der schlitzförmigen Öffnungsteile 220, 230 an.

Neben dem äußerst geringen Materialeinsatz für die Befestigung der Feder und der großen Wahlfreiheit für die Form der Feder selbst hat die Erfindung den großen Vorteil, daß in der Mitte einer Maschenwand zwei in benachbarte Maschen ragende Federn in der gleichen Montageöffnung sitzen können. Das dabei verwendete Prinzip kann anhand der Feder 6 (Figur 18)) kurz dadurch angegeben werden, daß die Feder, von der in Figur 18 nur das obere Ende 301 sichtbar ist, an diesem Oberen; de seitlich je einen Rand 303, 304 besitzt, der so um die Brennelementachse aus der Masche 206 herausgebogen ist, daß er durch die Montageöffnung 304 im Steg 201 hindurch ragen.

Diese beiden Ränder (302, 303) tragen jewe-ils ein Profil, das eine Kante der Montageöffnung 304 annähernd formschlüssig umgreift. Auch das untere Ende der Feder besitzt an beiden Seiten je einen entsprechend nach außen gebogenen Rand mit einem Profil zum formschlüssigen Umgreifen einer Kante der Montageöffnung.

## Patentansprüche

1. Abstandhalter eines Brennelements für einen mit Leichtwasser gekühlten Kernreaktor, mit sich kreuzenden Stegen (1, 2, 3, 4), die Maschen für einsetzbare Brennstäbe bilden, und mehreren Federn (5), wobei jede Feder auf folgende Weise in einer Montageöffnung (12, 13, 14, 15) eines Steges gehalten ist:
a) die Feder weist einen dem Brennstab zugewandten, federnden Mittelteil (6) auf, an den sich oben und unten - bezogen auf die Achsrichtung (A-A) des Brennstabs - je ein praktisch parallel zum Steg verlaufender Endstreifen (8, 9) anschließt,
b) jeder Endstreifen (8, 9 bzw. 46, 47) besitzt zwei seitliche Ränder (48, 49, 50, 51), die jeweils parallel zur Achsrichtung verlaufen und vom Brennstab weg um diese Achsrichtung gebogen sind,
c) an beiden Rändern jedes Endstreifens sitzen Profile (10, 11), die in der Betriebsstellung der Feder jeweils mit einem inneren Teil an einer dem Brennstab zugewandten Innenfläche eines die Masche bildenden Steges (2) abgestützt sind und mit jeweils einem äußeren Profilteil durch einen im wesentlichen schlitzförmigen Öffnungsteil (22, 23, 24, 25) der Montageöffnung hindurch die Kanten (26, 27) am Ende des Öffnungsteils umgreifen, und
d) jeder schlitzförmige Teil der Montageöffnung führt zu einem vergrößerten Öffnungsteil (30, 31, 32, 33), der sich an einem Teil des Steges befindet, der einer zur Betriebsstellung seitlich versetzten Montagestellung der Feder entspricht und so geformt ist, daß die Feder (5) mit den äußeren Profilteilen der Endstreifen (8, 9) in die Montageöffnung (12, 13, 14, 15) einsetzbar und von der Montagestellung aus längs des schlitzförmigen Öffnungsteils (22, 23, 24, 25) in die Betriebsstellung verschiebbar ist,
**dadurch gekennzeichnet,** daß in der Betriebsstellung der Feder und bei eingesetztem Brennstab wenigstens ein Teil der Feder durch ihre Federkraft in eine Rastöffnung des Steges gedrückt ist und/oder daß der Mittelteil der Feder und/oder wenigstens einer der Endstreifen eine vom Brennstab wegweisende Erhebung trägt, die in der Betriebsstellung der Feder in eine Rastöffnung des Steges eingreift.

2. Abstandhalter nach Anspruch 1,
**dadurch gekennzeichnet,** daß die schlitzförmigen Teile (86, 87) der Montageöffnung jeweils in voneinander getrennte und übereinander liegende vergrößerte Öffnungsteile (88, 89) münden.

3. Abstandhalter nach Anspruch 1 oder 2,
**dadurch gekennzeichnet,** daß jedem Rand (48, 49, 50, 51) eines Endstreifens (46, 47) ein eigener schlitzförmiger Teil (70, 71, 72, 73) der Montageöffnung zugeordnet ist.

4. Abstandhalter nach einem der Ansprüche 1 bis 3,
**dadurch gekennzeichnet,** daß die Länge der schlitzförmigen Öffnungsteile (70, 71, 72, 73) praktisch der halben Breite (79) der Endstreifen entspricht und daß die vergrößerte Öffnungsfläche (88, 89) gleichzeitig die Rastöffnung bildet, in die die vom Brennstab wegweisende Erhebung (97, 98) eingreift.

5. Abstandhalter nach Anspruch 1,
**dadurch gekennzeichnet,** daß die Montageöffnung aus vier voneinander getrennten, jeweils einem anderen Rand (18, 19, 20, 21) der Endstreifen (16, 17) zugeordneten schlitzförmigen Teilen (22, 23, 24, 25) besteht, deren Länge jeweils praktisch der halben Breite der Endstreifen entspricht, daß jeder schlitzförmige Öffnungsteil (22, 23, 24, 25) in jeweils eine von vier voneinander getrennten vergrößerten Öffnungsquerschnitten (30, 31, 32, 33) enden, daß die vergrößerten Öffnungsquerschnitte jeweils paarweise übereinander liegen und daß ein Paar (30, 31) dieser vergrößerten Öffnungsquerschnitte soweit in Längsrichtung des Brennstabs vergrößert ist, daß dieses Paar der Öffnungsquerschnitte die Rastöffnung bildet und die äußeren Enden der Feder (6) aufnehmen kann, wenn der Brennstab die Feder in Richtung des Steges drückt.

6. Abstandhalter nach einem der Ansprüche 1 bis 5,
**dadurch gekennzeichnet,** daß die Endstreifen (8, 9) sich ungefähr parallel zu dem die Montageöffnung tragenden Steg (2) erstrecken.

7. Abstandhalter eines Brennelements für einen mit Leichtwasser gekühlten Kernreaktor, mit sich kreuzenden Stegen, die Maschen für einsetzbare Brennstäbe bilden, mit zwei Federn (100, 110), die in einer Montageöffnung eines zwei benachbarten Maschen gemeinsamen Steges (130) gehalten sind, und mit folgenden Merkmalen:
a) die erste Feder (100) enthält
i) einen in die erste Masche ragenden ersten federnden Mittelteil (101), der einen in die erste Masche einsetzbaren ersten Brennstab seitlich abstützt und an den sich - bezogen auf die Brennstab-Achse - oben und unten jeweils ein erster Endstreifen (102, 103) anschließt,
ii) einen linken (106, 107) und rechten (108, 109) seitlichen Rand an jedem der beiden ersten Endstreifen (102, 103), wobei diese vier Ränder (106, 107, 108, 109) ungefähr parallel zur Brennstab-Achse verlaufen und vom ersten Brennstab weggebogen sind,
iii) ein erstes Profil an jedem dieser Ränder, wobei in einer Betriebsstellung der ersten Feder jedes Profil mit einem inneren Profilteil (108') an einer dem ersten Brennstab zugewandten ersten Seitenfläche des gemeinsamen Steges (120) abgestützt ist und mit einem äußeren Profilteil (108") durch die Montageöffnung (134) hindurch um Stegkanten am Rand der Montageöffnung greift,
b) die zweite Feder (110) enthält einen in die zweite Masche ragenden zweiten federnden Mittelteil (111), der einen in die zweite Masche einsetzbaren zweiten Brennstab seitlich abstützt und an den sich - bezogen auf die Brennstab-Achse - oben und unten jeweils ein zweiter Endstreifen (112, 113) anschließt,
ii) jeweils einen linken (116, 117) und rechten (118, 119) seitlichen Rand an jedem der beiden zweiten Endstreifen, wobei diese vier Ränder (116, 117, 118, 119) jeweils ungefähr parallel zur Brennstab-Achse verlaufen und vom zweiten Brennstab weggebogen sind, und
iii) ein zweites Profil an jedem dieser vier Ränder (116, 117, 118, 119), wobei in einer Betriebsstellung der zweiten Feder jedes Profil mit einem inneren Profilteil (118') an einer dem zweiten Brennstab zugewandten zweiten Seitenfläche des gemeinsamen Steges abgestützt ist und mit einem äußeren Profilteil (118") durch die Montageöffnung hindurch um Stegkanten am Rand der Montageöffnung greift,
c) in der Betriebsstellung beider Federn liegen sich die oberen Endstreifen (102, 112) einander gegenüber und ebenso die unteren Endstreifen (103, 113) einander gegenüber und die Profile sind so geformt, daß vier Profilpaare (106, 116; 107, 117; 108, 118; 109, 119) aus einem ersten und einem danebenliegenden zweiten Profil entstehen, und daß die Montageöffnung enthält:
i) eine verbreiterte Öffnungsfläche (221), die an einer seitlich gegenüber der Betriebsposition der Federn verschobenen Position auf dem Steg (200) angeordnet ist und in die von der ersten Seitenfläche her die äußeren Profilteile der ersten Profile und von der zweiten Seitenfläche her die äußeren Profilteile der zweiten Profile einsetzbar sind,
ii) quer zu den Brennstäben verlaufende Öffnungskanten (221, 222, 231, 232) mindestens eines im wesentlichen schlitzförmigen Öffnungsteils (220, 230), in dem die äußeren Profilteile geführt werden, wenn die Federn von der Montagestellung seitlich in die Betriebsstellung (D) verschoben werden, und
iii) übereinander angeordnete Endkanten (225), an denen ein Paar übereinander liegender Profilpaare positioniert sind, wenn die Federn gemeinsam seitlich in die Betriebsstellung (D) geschoben sind, und
d) in der Betriebsstellung beider Federn ist wenigstens ein Teil einer Feder durch deren Federkraft in eine Rastöffnung (37) des Steges gedrückt und/oder der Mittelteil und/oder wenigstens einer der Endstreifen jeder Feder trägt eine vom Brennstab weg weisende Erhebung, die in der Betriebsstellung in eine Rastöffnung des Steges eingreift.

8. Abstandhalter nach Anspruch 7,
**dadurch gekennzeichnet,** daß zwei schlitzförmige Öffnungsteile (220, 230) vorgesehen sind, wobei der obere Öffnungsteil (220) den Profilen an den oberen Endstreifen, der untere Öffnungsteil (230) den Profilen an den unteren Endstreifen zugeordnet ist.

9. Verfahren nach Anspruch 8,
**dadurch gekennzeichnet,** daß jedem schlitzförmigen Öffnungsteil (220, 230) ein eigener Teil (221) der verbreiterten Öffnungsfläche zugeordnet ist und diese beiden Teile übereinander angeordnet sind.

10. Abstandhalter nach einem der Ansprüche 1 bis 9,
**gekennzeichnet durch** einen gewölbten Mittelteil (6) jeder Feder, der an jedem Ende durch eine konvexe Krümmung (7) in einen dem Steg praktisch parallelen Endstreifen (8, 9) übergeht.

11. Abstandhalter nach Anspruch 10,
**dadurch gekennzeichnet,** daß bei eingesetzem Brennstab (40) die konvexe Krümmung (7, 8) den vom Brennstab wegweisenden Vorsprung bildet, der in die Rastöffnung (36, 37) des Steges einrastet.

12. Abstandhalter nach einem der Ansprüche 1 bis 11,
**dadurch gekennzeichnet,** daß die Endstreifen (95, 96) eine zum federnden Mittelteil hin ragende Erhebung (99, 99') tragen.

13. Abstandhalter nach einem der Ansprüche 1 bis 12,
**dadurch gekennzeichnet,** daß dem federnden Mittelteil (81, 91) mindestens ein starres Anschlagelement, vorteilhaft zwei starre Noppen gegenüberliegen.

14. Abstandhalter nach einem der Ansprüche 1 bis 13,
**dadurch gekennzeichnet,** daß die Betriebsstellung in der Mitte eines Steges zwischen zwei Ecken der Masche festgelegt ist.

## Claims

1. Spacer of a fuel element for a light water cooled nuclear reactor, having intersecting webs (1, 2, 3, 4), which form meshes for insertable fuel rods, and having a plurality of springs (5), wherein each spring is held in an assembly opening (12, 13, 14, 15) of a web in the following manner:
a) the spring has a resilient central portion (6) which faces the fuel rod and connected to which at the top and the bottom - in relation to the axial direction (A-A) of the fuel rod - there is a respective end strip (8, 9) which extends so as to be practically parallel to the web,
b) each end strip (8, 9 and 46, 47 respectively) has two lateral edges (48, 49, 50, 51), each of which extends so as to be parallel to the axial direction and is bent away from the fuel rod about this axial direction,
c) sitting on both edges of each end strip there are profiled sections (10, 11) which in the operating position of the spring are supported by means of a respective inner portion on an inner face, facing the fuel rod, of a web (2) forming the mesh and, by means of a respective outer profiled portion, through a substantially slot-shaped opening portion (22, 23, 24, 25) of the assembly opening, embrace the edges (26, 27) at the end of the opening portion, and
d) each slot-shaped portion of the assembly opening leads to an enlarged opening portion (30, 31, 32, 33), located on one portion of the web, that corresponds to an assembly position of the spring that is laterally offset in relation to the operating position and is shaped in such a way that the outer profiled portions of the end strips (8, 9) of the spring (5) can be inserted into the assembly opening (12, 13, 14, 15) and the spring (5) can be displaced out of the assembly position along the slot-shaped opening portion (22, 23, 24, 25) into the operating position,
characterised in that in the operating position of the spring and when the fuel rod is inserted at least one portion of the spring is pressed as a result of its spring force into a locating opening of the web and/or in that the central portion of the spring and/or at least one of the end strips bears an elevation that points away from the fuel rod and which in the operating position of the spring engages into a locating opening of the web.

2. Spacer according to claim 1, characterised in that the slot-shaped portions (86, 87) of the assembly opening each run into enlarged opening portions (88, 89) which are separate from each other and lie one above the other.

3. Spacer according to claim 1 or 2,
characterised in that associated with each edge (48, 49, 50, 51) of an end strip (46, 47) there is a slot-shaped portion (70, 71, 72, 73) of the assembly opening that is peculiar thereto.

4. Spacer according to one of claims 1 to 3,
characterised in that the length of the slot-shaped opening portions (70, 71, 72, 73) corresponds to practically half the width (79) of the end strips and in that the enlarged opening face (88, 89) simultaneously forms the locating opening into which the elevation (97, 98) pointing away from the fuel rod engages.

5. Spacer according to claim 1, characterised in that the assembly opening consists of four slot-shaped portions (22, 23, 24, 25) which are separate from each other and, in each case, are associated with a different edge (18, 19, 20, 21) of the end strips (16, 17) and the length of which in each case corresponds to practically half the width of the end strips, in that each slot-shaped opening portion (22, 23, 24, 25) ends in, in each case, one of four enlarged opening cross sections (30, 31, 32, 33) which are separate from each other, in that the enlarged opening cross sections in each case lie one above the other in pairs and in that one pair (30, 31) of these enlarged opening cross sections is enlarged to such an extent in the longitudinal direction of the fuel rod that this pair of opening cross sections forms the locating opening and can receive the outer ends of the spring (6) when the fuel rod presses the spring in the direction of the web.

6. Spacer according to one of claims 1 to 5,
characterised in that the end strips (8, 9) extend so as to be substantially parallel to the web (2) bearing the assembly opening.

7. Spacer of a fuel element for a light water cooled nuclear reactor, having intersecting webs, which form meshes for insertable fuel rods, having two springs (100, 110) which are held in an assembly opening of a web (130) which is common to two adjacent meshes, and having the following features:
a) the first spring (100) comprises
i) a first resilient central portion (101) that projects into the first mesh and which laterally supports a first fuel rod which can be inserted into the first mesh and connected to which at the top and the bottom - in relation to the fuel-rod axis - there is a respective first end strip (102, 103),
ii) a left-hand lateral edge (106, 107) and a right-hand lateral edge (108, 109) on each of the two first end strips (102, 103), wherein these four edges (106, 107, 108, 109) extend so as to be substantially parallel to the fuel-rod axis and are bent away from the first fuel rod,
iii) a first profiled section on each of these edges, wherein in an operating position of the first spring each profiled section is supported by means of an inner profiled portion (108') on a first side face of the common web (120) facing the first fuel rod and, by means of an outer profiled portion (108"), through the assembly opening (134), embraces web edges at the edge of the assembly opening,
b) the second spring (110) comprises a second resilient central portion (111) that projects into the second mesh and which laterally supports a second fuel rod which can be inserted into the second mesh and connected to which at the top and the bottom - in relation to the fuel-rod axis - there is a respective second end strip (112, 113),
ii) in each case a left-hand lateral edge (116, 117) and a right-hand lateral edge (118, 119) on each of the two second end strips, wherein these four edges (116, 117, 118, 119) extend, in each case, so as to be substantially parallel to the fuel-rod axis and are bent away from the second fuel rod, and
iii) a second profiled section on each of these four edges (116, 117, 118, 119), wherein in an operating position of the second spring each profiled section is supported by means of an inner profiled portion (118') on a second side face of the common web facing the second fuel rod and, by means of an outer profiled portion (118''), through the assembly opening, embraces web edges at the edge of the assembly opening,
c) in the operating position of both springs the upper end strips (102, 112) lie opposite each other and the lower end strips (103, 113) also lie opposite each other and the profiled sections are shaped in such a way that four pairs of profiled sections (106, 116; 107, 117; 108, 118; 109, 119) are produced from a first profiled section and a second profiled section lying next to it, and in that the assembly opening comprises:
i) a widened opening face (221) which is arranged at a position on the web (200) that is laterally shifted in relation to the operating position of the springs and into which it is possible to insert the outer profiled portions of the first profiled sections from the first side face and the outer profiled portions of the second profiled sections from the second side face,
ii) opening edges (221, 222, 231, 232), which extend transversely in relation to the fuel rods, of at least one substantially slot-shaped opening portion (220, 230), in which the outer profiled portions are guided when the springs are displaced laterally from the assembly position into the operating position (D), and
iii) end edges (225) which are arranged one above the other and at which one pair of profiled sections lying one above the other are positioned when the springs are shifted together laterally into the operating position (D), and
d) in the operating position of both springs at least one portion of a spring is pressed as a result of the latter's spring force into a locating opening (37) of the web and/or the central portion and/or at least one of the end strips of each spring bears an elevation that points away from the fuel rod and which in the operating position engages into a locating opening of the web.

8. Spacer according to claim 7, characterised in that two slot-shaped opening portions (220, 230) are provided, wherein the upper opening portion (220) is associated with the profiled sections on the upper end strips and the lower opening portion (230) is associated with the profiled sections on the lower end strips.

9. Method (sic) according to claim 8,
characterised in that associated with each slot-shaped opening portion (220, 230) there is a portion (221) of the widened opening face that is peculiar thereto and these two portions are arranged one above the other.

10. Spacer according to one of claims 1 to 9, characterised by an arched central portion (6) of each spring which at each end by way of a convexly curved portion (7) turns into an end strip (8, 9) that is practically parallel to the web.

11. Spacer according to claim 10, characterised in that when a fuel rod (40) is inserted, the convexly curved portion (7, 8) forms the projection that points away from the fuel rod and which engages into the locating opening (36, 37) of the web.

12. Spacer according to one of claims 1 to 11, characterised in that the end strips (95, 96) bear an elevation (99, 99') that projects towards the resilient central portion.

13. Spacer according to one of claims 1 to 12, characterised in that at least one rigid stop element, advantageously two rigid protuberances, lie opposite the resilient central portion (81, 91).

14. Spacer according to one of claims 1 to 13, characterised in that the operating position is fixed in the centre of a web between two corners of the mesh.

## Revendications

1. Grille d'espacement d'un assemblage combustible pour un réacteur nucléaire refroidi à l'eau légère, comportant des entretoises (1, 2, 3, 4) croisées qui forment des mailles pour des crayons combustibles à insérer, et comportant plusieurs ressorts (5), chaque ressort étant maintenu de la manière suivante dans une ouverture (12, 13, 14, 15) de montage d'une entretoise :
a) le ressort comporte une partie (6) centrale élastique, tournée vers le crayon combustible et à laquelle se raccorde en haut et en bas - par rapport à la direction (A-A) axiale du crayon combustible - une bande (8, 9) terminale respective s'étendant pratiquement parallèlement à l'entretoise,
b) chaque bande (8, 9 ou 46, 47) terminale possède deux bords (48, 49, 50, 51) latéraux, qui s'étendent chacun parallèlement à la direction axiale et sont courbés en éloignement du crayon combustible autour de cette direction axiale,
c) il est monté, sur les deux bords de chaque bande terminale, des profilés (10,11) qui, dans la position de service du ressort, s'appuient par une partie intérieure respective contre une face intérieure, tournée vers le crayon combustible, d'une entretoise (2) formant la maille, et qui, par une partie extérieure respective de profilé, en passant dans une partie (22, 23, 24, 25) essentiellement en forme de fente de l'ouverture de montage, s'accrochent autour des arêtes (26, 27) à l'extrémité de la partie d'ouverture, et
d) chaque partie en forme de fente de l'ouverture de montage mène à une partie (30, 31, 32, 33) d'ouverture agrandie, qui se trouve sur une partie de l'entretoise, qui correspond à une position de montage du ressort latéralement décalée par rapport à la position de service et qui est conformée de telle sorte que le ressort (5) peut être inséré dans l'ouverture (12, 13, 14, 15) de montage par les parties extérieures de profilé des bandes (8, 9) terminales et, à partir de la position de montage, peut être mis, en étant déplacé le long de la partie (22, 23, 24, 25) d'ouverture en forme de fente, dans la position de service
**caractérisée** en ce que, dans la position de service du ressort et lorsque le crayon combustible est inséré, au moins une partie du ressort est repoussée par son élasticité dans une ouverture d'encliquetage de l'entretoise, et/ou en ce que la partie centrale du ressort et/ou au moins une des bandes terminales porte un bossage, qui est dirigé en éloignement du crayon combustible et qui, dans la position de service du ressort, pénètre dans une ouverture d'encliquetage de l'entretoise.

2. Grille d'espacement suivant la revendication 1, **caractérisée** en ce que les parties (86, 87) en forme de fente de l'ouverture de montage débouchent respectivement dans des parties (88, 89) d'ouverture agrandies mutuellement séparées et superposées,

3. Grille d'espacement suivant la revendication 1 ou 2,
**caractérisée** en ce qu'une partie (70, 71, 72, 73) en forme de fente de l'ouverture de montage est associée en propre à chaque bord (48, 49, 50, 51) d'une bande (46, 47) terminale.

4. Grille d'espacement suivant l'une des revendications 1 à 3,
**caractérisée** en ce que la longueur des parties (70, 71, 72, 73) d'ouverture en forme de fente correspond pratiquement à la moitié de la largeur (79) de la bande terminale, et en ce que la surface (88, 89) d'ouverture agrandie constitue en même temps l'ouverture d'encliquetage dans laquelle pénètre le bossage (97, 98) dirigé en éloignement du crayon combustible.

5. Grille d'espacement suivant la revendication 1, **caractérisée** en ce que l'ouverture de montage est constituée de quatre parties (22, 23, 24, 25) d'ouverture en forme de fente mutuellement associées et respectivement associées à un autre bord (18, 19, 20, 21) des bandes (16, 17) terminales, parties dont la longueur terminale respective correspond pratiquement à la moitié de la largeur des bandes terminales, en ce que chaque partie (22, 23, 24, 25) d'ouverture en forme de fente se termine en une section d'ouverture agrandie respective parmi quatre sections (30, 31, 32, 33) d'ouverture agrandies mutuellement séparées, en ce que les sections d'ouverture agrandies sont respectivement superposées par paires, et en ce qu'une paire (30, 31) de ces sections d'ouverture agrandies est suffisamment agrandie dans la direction longitudinale du crayon combustible pour former l'ouverture d'encliquetage et pouvoir recevoir les extrémités extérieures du ressort (6) lorsque le crayon combustible repousse le ressort en direction de l'entretoise.

6. Grille d'espacement suivant l'une des revendications 1 à 5, **caractérisée** en ce que les bandes (8, 9) terminales s'étendent environ parallèlement à l'entretoise (2) portant l'ouverture de montage.

7. Grille d'espacement d'un assemblage combustible pour un réacteur nucléaire refroidi à l'eau légère, comportant des entretoises croisées qui forment des mailles pour des crayons combustibles à insérer, comportant deux ressorts (100, 110), qui sont maintenus dans une ouverture de montage d'une entretoise (120) commune à deux mailles voisines, et comportant les caractéristiques suivantes :
a) le premier ressort (100) comporte
i) une première partie (101) centrale élastique, qui fait saillie dans la première maille et soutient latéralement un premier crayon combustible à insérer dans la première maille, et à laquelle se raccorde en haut et en bas - par rapport à l'axe du crayon combustible - une première bande (102, 103) terminale respective,
ii) un bord latéral gauche (106, 107) et droit (108, 109) sur chacune des deux premières bandes (102, 103) latérales, ces quatre bords (106, 107, 108, 109) s'étendant environ parallèlement à l'axe du crayon combustible et étant courbés en éloignement du premier crayon combustible,
iii) un premier profilé sur chacun de ces bords, chaque profilé, dans une position de service du premier ressort, s'appuyant par une partie (108') intérieure de profilé contre une première face latérale, tournée vers le premier crayon combustible, de l'entretoise (120) commune, et, par une partie (108") extérieure de profilé, en passant dans l'ouverture (134) de montage, s'accrochant autour d'arêtes d'entretoise sur le bord de l'ouverture de montage,
b) le deuxième ressort (110) comporte
i) une deuxième partie (111) centrale élastique, qui fait saillie dans la deuxième maille et soutient latéralement un deuxième crayon combustible à insérer dans la deuxième maille, et à laquelle se raccorde en haut et en bas - par rapport à l'axe du crayon combustible - une deuxième bande (112, 113) terminale respective,
ii) un bord latéral gauche (116, 117) et droit (118, 119) sur chacune des deux deuxièmes bandes latérales, ces quatre bords (116, 117, 118, 119) s'étendant chacun environ parallèlement à l'axe du crayon combustible et étant courbés en éloignement du deuxième crayon combustible,
iii) un deuxième profilé sur chacun de ces quatre bords (116, 117, 118, 119), chaque profilé, dans une position de service du deuxième ressort, s'appuyant par une partie (118') intérieure de profilé contre une deuxième face latérale, tournée vers le deuxième crayon combustible, de l'entretoise commune, et, par une partie (118") extérieure de profilé, en passant dans l'ouverture (134) de montage, s'accrochant autour d'arêtes d'entretoise sur le bord de l'ouverture de montage,
c) dans la position de service des deux ressorts, les bandes (102, 112) terminales supérieures se font face, tout comme les bandes (103, 113) terminales inférieures, et les profilés sont conformés de telle sorte que quatre paires (106, 116 ; 107, 117 ; 108, 118 ; 109, 119) de profilés sont constituées d'un premier profilé et d'un deuxième profilé juxtaposé, et l'ouverture de montage comporte :
i) une surface (221) d'ouverture élargie, qui est disposée sur l'entretoise (200) en une position latéralement décalée par rapport à la position de service des ressorts, et dans laquelle peuvent être insérées, depuis la première face latérale, les parties extérieures des premiers profilés et, depuis la deuxième face latérale, les parties extérieures des deuxièmes profilés,
ii) des arêtes (221, 222, 231, 232) d'ouverture, s'étendant transversalement aux crayons combustibles, d'au moins une partie (220, 230) d'ouverture essentiellement en forme de fente, dans laquelle sont guidées les parties extérieures de profilés lorsque les ressorts sont déplacés latéralement de la position de montage à la position (D) de service, et
iii) des arêtes (225) terminales superposées, contre lesquelles sont placées deux paires superposées de profilés lorsque les ressorts sont conjointement déplacés latéralement pour venir dans la position (D) de service, et
d) dans la position de service des deux ressorts, au moins une partie d'un ressort est repoussée par son élasticité dans une ouverture (37) d'encliquetage de l'entretoise, et/ou la partie centrale et/ou au moins une des bandes terminales de chaque ressort porte un bossage, qui est dirigé en éloignement du crayon combustible et qui, dans la position de service du ressort, pénètre dans une ouverture d'encliquetage de l'entretoise.

8. Grille d'espacement suivant la revendication 7, **caractérisée** en ce qu'il est prévu deux parties (220, 230) d'ouverture en forme de fente, la partie (220) d'ouverture supérieure étant associée aux profilés sur les bandes terminales supérieures, et la partie (230) d'ouverture inférieure aux profilés sur les bandes terminales inférieures.

9. Grille d'espacement suivant la revendication 8, **caractérisée** en ce qu'une partie (221) de la surface d'ouverture élargie est associée en propre à chaque partie (220, 230) d'ouverture en forme de fente, et ces deux parties sont superposées.

10. Grille d'espacement suivant l'une des revendications 1 à 9, **caractérisée** par une partie (6) centrale bombée de chaque ressort, qui se raccorde à chaque extrémité par une courbure (7) convexe à une bande (8, 9) terminale pratiquement parallèle à l'entretoise.

11. Grille d'espacement suivant la revendication 10, **caractérisée** en ce que, lorsque le crayon (35) combustible est inséré, la courbure (7, 8) convexe forme la saillie qui est dirigée en éloignement du crayon combustible et s'encliquète dans l'ouverture (36, 37) d'encliquetage de l'entretoise.

12. Grille d'espacement suivant l'une des revendications 1 à 11, **caractérisée** en ce que les bandes (95, 96) terminales portent un bossage (99, 99') faisant saillie en direction de la partie centrale élastique.

13. Grille d'espacement suivant l'une des revendications 1 à 12, **caractérisée** en ce qu'au moins un élément de butée rigide, de préférence deux bossages rigides, font face à la partie (81,101) centrale élastique.

14. Grille d'espacement suivant l'une des revendications 1 à 13, **caractérisée** en ce que la position de service est définie au milieu d'une entretoise entre deux coins de la maille.
